# FASCICULE DE BREVET EUROPEEN

(11) **EP 0 989 156 B1**
(45) Date de publication et mention de la délivrance du brevet: **17.11.2004**
(21) Numéro de dépôt: 99402327.3
(22) Date de dépôt: 23.09.1999
(51) Int. Cl.: C08J 9/00, B32B 5/18

(54) **Produit en mousse de polyoléfine réticulée souple**
Vernetzter Polyolefinweichschaumstoff
Flexible crosslinked polyolefin foam

(30) Priorité: 24.09.1998 FR 9811912
(43) Date de publication de la demande: 29.03.2000
(73) Titulaire: Saint-Gobain Performance Plastics Chaineux, 4650 Chaineux (BE)
(72) Inventeur: Ladang, Michel, 4651 Battice (BE); Petit, Dominique, 4671 Blegny (BE)
(74) Mandataire: Muller, René

(56) Documents cités:
- FR-A- 2 006 957
- US-A- 3 812 225
- US-A- 5 087 395
- PATENT ABSTRACTS OF JAPAN vol. 097, no. 010, 31 octobre 1997 (1997-10-31) & JP 09 150431 A (SEKISUI CHEM CO LTD), 10 juin 1997 (1997-06-10)

## Description

La présente invention est relative à un produit en mousse de polyoléfine réticulée.

Les mousses de polyoléfine réticulée sont des mousses flexibles de densités relativement faibles, en général inférieures à 200 kg/m³, et dont la phase solide consiste pour l'essentiel en polyoléfines réticulées. Les polyoléfines les plus employées dans ce domaine sont les polyéthylène (PE), polypropylène (PP) et copolymère éthylène/acétate de vinyle (EVA).

La réticulation permet d'améliorer les mousses sur de nombreux points, quant à leurs propriétés mécaniques ; des structures cellulaires plus fines sont obtenues.

La réticulation peut consister en une irradiation à haute énergie telle que par faisceau d'électrons, en une réaction chimique avec des agents du type peroxydes ou avec l'humidité par incorporation d'un groupe silane latéral sur le squelette de la polyoléfine. Dans les deux premiers procédés cités, on crée sur les chaînes carbonées des molécules de polyoléfines des sites réactifs à radicaux libres en vue de la formation ultérieure des liaisons intermoléculaires de réticulation.

Dans le troisième procédé (réticulation à l'humidité), la réticulation est réalisée par formation de liaisons intermoléculaires :
polyoléfine-Si-O-Si-polyoléfine.

La réticulation par irradiation à haute énergie est remarquable dans son aptitude à produire une réticulation parfaitement uniforme en surface ; elle permet de fabriquer des feuilles en mousse de haute qualité, aussi fines que de 0,2 mm d'épaisseur.

La situation est inverse pour la réticulation chimique par peroxydes ou autres et la réticulation au silane, recommandées pour des feuilles d'épaisseurs plus importantes, par exemple comprises entre 3 et 18 mm, car dans ces procédés, la réticulation a lieu dans toute l'épaisseur du produit, de manière homogène et régulière. En revanche, ces procédés sont moins bien appropriés pour des feuilles très minces car à l'échelle microscopique, la dispersion des agents réticulants est moins homogène que ce qu'un faisceau d'électrons permet d'obtenir.

D'autre part, l'expansion des mousses de polyoléfine réticulée se produit dans les trois dimensions, lorsqu'aucune contrainte particulière n'est appliquée. Il importe de régler soigneusement le degré de réticulation de la résine au début de l'expansion et pendant toute sa durée ; la teneur des compositions de départ en agent d'expansion et de réticulation en cas de réticulation chimique est, bien entendu, adaptée à cet effet ainsi que les durées et températures des traitements thermiques.

Les agents d'expansion sont répartis dans deux classes principales : les agents organiques volatiles tels que chlorofluorocarbones (CFC) et les agents chimiques tels qu'azodicarbonamide. Tous les agents d'expansion sont susceptibles d'être employés conformément à l'invention, selon tous les modes de mise en oeuvre bien connus de l'art antérieur comprenant, selon les cas, des opérations d'extrusion et/ou maintien sous pression puis détente et/ou chauffage, etc.

Dans la préparation de mousse de polyoléfine réticulée, le début de l'expansion a habituellement lieu dans un état déjà partiellement réticulé de la résine. Cette mesure vise à augmenter la viscosité de la résine et conditionne ainsi la régularité et la finesse de la structure cellulaire finalement obtenue. Dans ce cas, la réticulation se poursuit pendant l'expansion et, éventuellement, après.

Néanmoins, la réticulation peut être aussi commencée pendant, ou même après l'expansion (notamment dans l'association d'un agent d'expansion physique, c'est-à-dire actif sous l'effet d'une détente, tel que l'isobutane, et d'un agent de réticulation silane évoqué précédemment), sans que l'on sorte du cadre de l'invention.

L'un des inconvénients des mousses de polyoléfine réticulée connues à l'heure actuelle réside dans leur relative dureté. Leur structure cellulaire régulière et fine, à cellules fermées, leur confère par ailleurs de bonnes propriétés d'étanchéité, flottabilité, etc. Cependant, dans des applications d'isolation notamment pour le bâtiment, dans la constitution de joints d'étanchéité, leur souplesse médiocre évoquée ci-dessus constitue un handicap, en particulier dans les situations dans lesquelles le produit en mousse doit épouser et/ou boucher un relief complexe présentant des anfractuosités.

Il existe donc un besoin de définir des caractéristiques de souplesse appropriées, notamment pour les applications citées, et qui permettent néanmoins de préserver les qualités de structure cellulaire et d'aspect de surface de toutes les mousses de polyoléfine réticulée à un niveau suffisant.

Ce but est atteint par l'invention dont l'objet consiste en un produit en mousse de polyoléfine réticulée, qui présente une compression mesurée selon la norme ASTM D 1667 avec un taux de compression de 30 % et une vitesse de compression de 10 mm/min, au plus égale à 7 N/cm² pour une densité au moins égale à 100 kg/m³, étant entendu que cette compression maximale est susceptible de décroître pour des densités plus faibles et croître pour des densités plus élevées.

De préférence, le taux de gel de ce produit, défini comme le pourcentage pondéral de la fraction insoluble - en extrait sec - d'un échantillon de 50 mg immergé pendant 24 heures à 120°C dans 25 ml de xylène séché sur tamis moléculaire, est compris entre 30 et 70 %, notamment entre 40 et 60 % et, de manière particulièrement préférée, entre 45 et 55 %.

Pour certaines mousses de polyoléfine réticulée de 100 kg/m³ de densité, des compressions sensiblement inférieures à 7 N/cm² sont immanquablement liées à une structure cellulaire grossière et une détérioration rédhibitoire de l'aspect de surface. En ce sens, la compression maximale revendiquée a un caractère universel dans les conditions définies.

De nombreux types de compositions sont compatibles avec l'invention ; deux types avantageux peuvent être remarqués.

Un premier type de composition de départ comprend au moins 20 % en poids d'un polyéthylène ou d'un copolymère d'éthylène essentiellement linéaire de densité comprise entre 0,80 et 0,96 g/cm³.

De manière particulièrement préférée, le polyéthylène ou le copolymère d'éthylène utilisé est obtenu par catalyse au métallocène et a une densité au plus égale à 0,92 g/cm³. En ce qui concerne la composition de ces polymères préférés et, en particulier leurs caractéristiques physiques et la nature des comonomères, la demande de brevet EP 0 702 032 A2, qui décrit également leur traitement par réticulation et expansion, est incorporée ici à titre de référence.

Un second type de composition de départ préférée comprend au moins 10 % en poids d'au moins un élastomère polyoléfinique, choisi de manière particulièrement préférée parmi un copolymère éthylène/acétate de vinyle, un terpolymère éthylène/propylène/monomère diénique et un caoutchouc butyle.

Selon une forme privilégiée eu égard aux considérations pratiques liées à la fabrication, au stockage, à la commercialisation et à l'utilisation du produit, celui-ci est avantageusement essentiellement plat, d'épaisseur comprise entre 2 et 100 mm et, de préférence, entre 8 et 30 mm. Il est susceptible d'être préparé en continu selon des procédés bien connus sous les désignations de procédé Toray avec emploi d'un bain chauffé de KNO₃/NaNO₂, procédés Toray et Sekisui à four vertical et contre-courant d'air chaud, les plus avantageux dans le cadre de l'invention étant les procédés Hitachi et Furukawa à four horizontal et trois zones de chauffage graduel.

La bande continue de produit en mousse ainsi fabriquée peut être recueillie sous forme d'enroulements ou débitée en plaques selon l'utilisation envisagée et les caractéristiques physiques du produit.

Selon un mode de réalisation particulièrement intéressant, l'une au moins des deux faces du produit essentiellement plat est associée à un support avec adhésion. En général, le support a sensiblement la forme d'une feuille. L'adhésion résulte par exemple d'une opération de coextrusion ou est obtenue progressivement au cours de la formation de la mousse, notamment par fluage de la résine, puis transformation physico-chimique de celle-ci (formation de liaisons intermoléculaires, expansion) ou même, éventuellement, par réaction chimique entre résine et support. Dans certains cas, cette adhésion n'empêche pas la séparation du support après formation de la mousse.

Il est à remarquer par ailleurs qu'un produit selon l'invention comportant un support sur chacune de ses deux faces ne peut, en général, pas être enroulé, à moins que l'un au moins des deux supports ne présente des propriétés mécaniques particulières (élasticité, compressibilité...).

D'autre part, l'invention a également pour objet l'application du produit décrit ci-dessus en tant que garniture d'étanchéité, notamment pour le bâtiment et les véhicules de transport (joint de portière automobile...).

D'autres caractéristiques et avantages de l'invention apparaîtront dans l'exemple suivant.

### EXEMPLE

On prépare des mousses de polyoléfine réticulée à partir de mélanges comportant les polymères suivants :
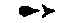 polyéthylène basse densité commercialisé par la société POLIMERI EUROPA sous la marque enregistrée RIBLENE :
   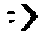 grade FL 20 :
      ◆ densité d = 0,921 g/cm³,
      ◆ indice de fluidité à chaud (MFI) [Melt Flow Index] = 2.2 g/10 min ;
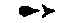 elastomères copolymères d'éthylène, obtenus par catalyse au métallocène et commercialisés par la société DU PONT DOW ELASTOMERS sous la marque enregistrée ENGAGE :
   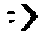 grade 8400 :
      ◆ d = 0,870 g/cm³,
      ◆ MFI = 30 g/ 10 min ;
   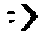 grade 8200 :
      ◆ d = 0,870 g/cm³,
      ◆ MFI = 5 g/ 10 min ;
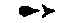 copolymère éthylène/butène obtenu par catalyse au métallocène et commercialisé par la société EXXON CHEMICAL sous la marque enregistrée EXACT :
   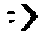 grade 5008 :
      ◆ d = 0,865 g/cm³,
      ◆ MFI = 10 g/10 min ;
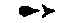 copolymère éthylène/acétate de vinyle commercialisé par la société ATOCHEM sous la marque enregistrée EVATANE :
   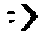 grade 28-25 :
      ◆ d = 0,950 g/cm³,
      ◆ MFI = 22-29 g/ 10 min
      (teneur pondérale en acétate de vinyle comprise entre 27 et 29 %) ;
   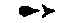 copolymère isobutylène/isoprène (caoutchouc butyle), commercialisé ****par la société EXXON CHEMICAL sous la désignation 268 :
      ◆ d = 0,920 g/cm³,
      ◆ viscosité Mooney ML 1 + 8 à 125°C = 51 ± 5
   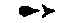 copolymère isobutylène/isoprène, commercialisé par la société EXXON CHEMICAL sous la désignation 065 :
      ◆ d = 0,920 g/cm³,
      ◆ viscosité Mooney ML 1 + 8 à 100°C = 45 ± 4.

Les densités sont déterminées conformément à la norme ASTM D 1505 ; le MFI à la norme ASTM D 1238 et la viscosité Mooney à la norme ASTM D 1646.

Une composition contenant un ou deux des polymères précités est homogénéisée pendant 3 min. On y ajoute, en 40 secondes, de l'agent gonflant en proportion habituelle (environ 30 g pour 100 g de polymère), Cet agent gonflant, commercialisé par la société TRAMACO sous la désignation TRACEL XL 3139, est un azodicarbonamide (agent gonflant) mélangé à un peroxyde organique (agent de réticulation), tous deux étant dispersés dans une polyoléfine. Sa température de décomposition est d'environ 145°C.

On mélange pendant 10 min dans un mélangeur de Brabender à une température de 125°C et une vitesse de rotation de 60 t/min.

Le produit est prélevé, placé entre deux feuilles de tissu de verre totalement imprégné de poly(tétrafluoroéthylène). Un film composite de 2 mm d'épaisseur est ainsi réalisé au moyen d'une presse hydraulique chauffée à 110°C.

L'expansion est effectuée par chauffage à 210°C pendant 4 min 30 s à 5 min. Finalement, les feuilles de tissu de verre sont séparées de la mousse obtenue.

Différents essais sont réalisés sur cette mousse :
- mesure de la densité (kg/m³),
- compression C (N/cm²) selon la norme ASTM D 1667 avec taux de compression de 30 % et une vitesse de compression de 10 mm/min,
- déflexion R (N/cm²) (maintien de la compression à 30 % pendant 1 min),
- absorption d'eau (% en poids),
- déformation permanente à la compression (compression set) (%) : ce pourcentage exprime une diminution d'épaisseur, mesurée après compression d'un échantillon à 25 % de son épaisseur pendant 22 heures à température ambiante, puis repos pendant 24 heures à la même température.

Les résultats sont reproduits dans le tableau I suivant :

**TABLEAU I**

| Composition | Densité (kg/m³) | C/R (N/cm²) | Absorption d'eau (%) | Compression set (%) |
|---|---|---|---|---|
| En 8400/RIBLENE | | | | |
| 100/0 | 120 | 2,53/1,95 | 22,20 | 6,66 |
| 70/30 | 103 | 2,44/1,46 | 48,11 | 11,62 |
| 50/50 | 102 | 6,38/4,31 | 30,60 | 8,50 |
| En 8200/RIBLENE | | | | |
| 100/0 | 126 | 4,25/3,33 | 19,50 | 7,66 |
| 70/30 | 104 | 5,36/3,86 | | 6,66 |
| Ex 5008/RIBLENE | | | | |
| 100/0 | 130 | 1,92/1,52 | 35,60 | 6,70 |
| 70/30 | 120 | 6,35/3,70 | 11,80 | 7,60 |
| Avec : En = Engage ; Ex = Exact ; C = Compression ; R = Déflexion | | | | |

Les mousses de polyoléfine réticulée obtenues sont remarquables par leur souplesse, comme indiqué par la valeur de C comprise entre 1,92 et 6,38 N/cm² pour des densités ≥ 102 kg/m³.

Les mousses sont à structure fine et à cellules fermées pour une bonne partie, ce qu'indiquent des valeurs relativement faibles de quantités d'eau absorbée. Leur taux de gel, tel que défini précédemment, est compris dans tous les cas entre 40 et 60 %.

Elles sont susceptibles d'être appliquées dans des domaines variés, y compris les plus exigeants comme le marché de l'étanchéité.

La structure des mousses est bonne, y compris celle de leur peau : la surface est lisse et présente un bel aspect exempt irrégularités.

Une seconde série d'essais a été réalisée en remplaçant le polyéthylène basse densité (LDPE) RIBLENE par des produits élastomériques de masses moléculaires moins élevées, en l'occurrence les copolymères isobutylène/isoprène et éthylène/acétate de vinyle mentionnés précédemment.

Les résultats sont reportés dans le tableau Il ci-dessous.

**TABLEAU II**

| Composition | Densité (kg/m³) | C/R (N/cm²) | Épaisseur (mm) |
|---|---|---|---|
| En 8400/N27 | | | |
| 70/30 | 142 | 1,81/1,21 | 10,95 |
| 50/50 | 161 | 2,16/1,35 | 10,30 |
| En 8400/065 | | | |
| 70/30 | 135 | 1,80/1,31 | 11,00 |
| En 8400/EVA 2825 | | | |
| 70/30 | 137 | 2,70/2,15 | |

Bien que les durées d'expansion aient été allongées entre 5 min 30 s et 6 min, celle-ci a eu lieu à un degré moindre qu'avec du LDPE au lieu d'un élastomère, comme l'indiquent les densités relativement élevées de 135 à 161 kg/ m³.

Les mousses obtenues présentent une souplesse remarquable (compressions faibles).

La structure cellulaire de la mousse réalisée à partir du butyle 065 est moins fine que les autres.

Par rapport à la première série d'essais (tableau I), les mousses de la seconde série (tableau II) ont une peau plus fine, plus fragile et adhérant plus au support.

Ainsi est mise à disposition , grâce à l'invention, une mousse de polyoléfine réticulée alliant à une structure cellulaire fine et régulière à cellules fermées, une excellente souplesse. Cette mousse est remarquable dans les applications liées à l'étanchéité dans le bâtiment ou les véhicules de transport.

## Revendications

1. Produit en mousse de polyoléfine réticulée, **caractérisé par** une compression mesurée selon la norme ASTM D 1667 avec un taux de compression de 30 % et une vitesse de compression de 10 mm/min, au plus égale à 7 N/cm² pour une densité au moins égale à 100 kg/m³, étant entendu que cette compression maximale est susceptible de décroître pour des densités plus faibles et croître pour des densités plus élevées.

2. Produit selon la revendication 1, **caractérisé par** un taux de gel de 30 à 70 %.

3. Produit selon la revendication 1 ou 2, **caractérisé en ce que** la mousse est obtenue à partir d'une composition comprenant au moins 20 % en poids d'un polyéthylène ou d'un copolymère d'éthylène essentiellement linéaire de densité comprise entre 0,80 et 0,96 g/cm³.

4. Produit selon la revendication 3, **caractérisé en ce que** le polyéthylène ou le copolymère d'éthylène est obtenu par catalyse au métallocène et a une densité au plus égale à 0,92 g/cm³.

5. Produit selon la revendication 1, **caractérisé en ce que** la mousse est obtenue à partir d'une composition comprenant au moins 10 % en poids d'au moins un élastomère polyoléfinique.

6. Produit selon la revendication 5, **caractérisé en ce que** l'élastomère polyoléfinique est choisi dans le groupe des copolymère éthylène/acétate de vinyle, terpolymère éthylène/propylène/monomère diénique, caoutchouc butyle.

7. Produit selon l'une des revendications 1 à 6, **caractérisé en ce qu'**il est essentiellement plat, d'épaisseur comprise entre 2 et 100 mm.

8. Produit selon la revendication 7, **caractérisé en ce que** son épaisseur est comprise entre 8 et 30 mm.

9. Produit selon la revendication 7, **caractérisé en ce que** l'une au moins de ses deux faces est associée à un support avec adhésion.

10. Produit selon la revendication 9, **caractérisé en ce que** le support est un tissu de verre totalement imprégné de poly(tétrafluoroéthylène).

11. Application du produit selon l'une des revendications 1 à 10 en tant que garniture d'étanchéité.

## Patentansprüche

1. Erzeugnis aus vernetztem Polyolefinschaumstoff, **gekennzeichnet durch** eine gemäß der Norm ASTM D 1667 gemessene Energieaufnahme mit einem Druckverformungsrest von 30 % und einer Komprimierungsgeschwindigkeit von 10 mm/min von höchstens 7 N/cm² bei einer Dichte von mindestens 100 kg/m³, wobei es selbstverständlich ist, dass diese maximale Energieaufnahme bei einer geringeren Dichte abnehmen und bei einer höheren Dichte zunehmen kann.

2. Erzeugnis nach Anspruch 1, **gekennzeichnet durch** einen Gelanteil von 30 bis 70 %.

3. Erzeugnis nach Anspruch 1 oder 2, **dadurch gekennzeichnet, dass** der Schaumstoff aus einer Zusammensetzung erhalten worden ist, die mindestens 20 Gew.-% eines Polyethylens oder eines im Wesentlichen linearen EthylenCopolymers mit einer Dichte von 0,80 bis 0,96 g/cm³ enthält.

4. Erzeugnis nach Anspruch 3, **dadurch gekennzeichnet, dass** das Polyethylen oder das Ethylen-Copolymer durch Katalyse mit einem Metallocen erhalten worden ist und eine Dichte von höchstens 0,92 g/cm³ besitzt.

5. Erzeugnis nach Anspruch 1, **dadurch gekennzeichnet, dass** der Schaumstoff aus einer Zusammensetzung erhalten worden ist, die mindestens 10 Gew.-% wenigstens eines Polyolefin-Elastomers enthält.

6. Erzeugnis nach Anspruch 5, **dadurch gekennzeichnet, dass** das Polyolefin-Elastomer aus der Gruppe der Ethylen-Vinylacetat-Copolymere und Ethylen-Propylen-Dienmonomer, Butylkautschuk-Terpolymere ausgewählt ist.

7. Erzeugnis nach einem der Ansprüche 1 bis 6, **dadurch gekennzeichnet, dass** es im Wesentlichen flach ist und seine Dicke 2 bis 100 mm beträgt.

8. Erzeugnis nach Anspruch 7, **dadurch gekennzeichnet, dass** seine Dicke 8 bis 30 mm beträgt.

9. Erzeugnis nach Anspruch 7, **dadurch gekennzeichnet, dass** mindestens eine seiner zwei Seiten durch Haftung mit einem Träger verbunden ist.

10. Erzeugnis nach Anspruch 9, **dadurch gekennzeichnet, dass** der Träger ein vollständig mit Polytetrafluorethylen imprägniertes Glasgewebe ist.

11. Verwendung des Erzeugnisses nach einem der Ansprüche 1 bis 10 als Dichtung.

## Claims

1. Product made from cross-linked polyolefin foam, **characterised by** a compression, measured according to ASTM D 1667 with a degree of compression of 30% and a compression rate of 10 mm/min, of no more than 7 N/cm² for a density of at least 100 kg/m³, it being understood that this maximum compression is able to decrease for lower densities and increase for higher densities.

2. Product according to Claim 1, **characterised by** a gel level of 30% to 70%.

3. Product according to Claim 1 or 2, **characterised in that** the foam is obtained from a composition comprising at least 20% by weight of a polyethylene or an essentially linear ethylene copolymer with a density of between 0.80 and 0.96 g/cm³.

4. Product according to Claim 3, **characterised in that** the polyethylene or ethylene copolymer is obtained by metallocene catalysis and has a density of no more than 0.92 g/cm³.

5. Product according to Claim 1, **characterised in that** the foam is obtained from a composition comprising at least 10% by weight of at least one polyolefin elastomer.

6. Product according to Claim 5, **characterised in that** the polyolefin elastomer is chosen from the group consisting of copolymer of ethylene/vinyl acetate, terpolymer of ethylene/propylene/diene monomer, or butyl rubber.

7. Product according to one of Claims 1 to 6, **characterised in that** it is essentially flat, with a thickness of between 2 and 100 mm.

8. Product according to Claim 7, **characterised in that** its thickness is between 8 and 30 mm.

9. Product according to Claim 7, **characterised in that** at least one of its two faces is associated with a support with adhesion.

10. Product according to Claim 9, **characterised in that** the support is a glass cloth totally impregnated with polytetrafluoroethylene.

11. Application of the product according to one of Claims 1 to 10 as a sealing lining.
